# DEMANDE DE BREVET EUROPEEN

(11) **EP 1 783 408 A1**
(43) Date de publication de la demande: **09.05.2007**
(21) Numéro de dépôt: 06076864.5
(22) Date de dépôt: 11.10.2006
(51) Int. Cl.: F16K 11/074

(54) **Dispositif déviateur ou combinateur pour des installations hydrauliques**

(30) Priorité: 03.11.2005 IT TO20050779
(71) Demandeur: Studio Tecnico Sviluppo E Ricerche S.T.S.R. S.r.l., I-24049 Verdellino Zingonia (IT)
(72) Inventeur: Knapp, Francesco, I-27061 Cava Manara PV (IT); Ferrari, Giuseppe, I-20084 Lacchiarella MI (IT)
(74) Mandataire: Patrito, Pier Franco

(57) **Abrégé**

Un dispositif déviateur ou combinateur pour des installations hydrauliques, comportant un corps (1), dans ce corps une chambre (2) dans laquelle ouvre une entrée d'alimentation (4), la chambre (2) comportant une surface plane (3') dans laquelle sont formées des ouvertures (5,6) connectées à des sorties de débit, et la chambre (2) comportant un rotor (7) dont l'axe de rotation (0) est perpendiculaire à la surface plane (3') de la chambre (2), ce rotor (7) étant pourvu d'un organe de manoeuvre (8), le dispositif étant caractérisé en ce que l'entrée d'alimentation (4) ouvre librement dans la chambre (2), et que le rotor (7) comporte un ou plusieurs organes tubulaires d'obturation (9), chacun desquels comporte une garniture d'étanchéité (12) sous forme de piston appliquée contre la surface plane (3') de la chambre (2) et coopérant avec les ouvertures (5,6) des sorties de débit pour les fermer, la cavité (10) de chaque organe d'obturation tubulaire (9) étant en communication avec la chambre (2). Eventuellement, un organe élastique de pré-charge (13) peut être disposé dans chaque organe d'obturation tubulaire (9) pour appliquer à la garniture à piston correspondante (12) une pression mécanique dirigée vers la surface plane (3') de la chambre (2). Selon sa configuration, le dispositif peut constituer un déviateur ayant deux ou plusieurs sorties, ou/et un combinateur.

## Description

La présente invention a pour objet un dispositif hydraulique qui peut être réalisé sous la forme d'un déviateur ou/et d'un combinateur.

Un déviateur pour des installations hydraulique est un dispositif qui est destiné à recevoir une entrée d'alimentation, venant d'un conduit ou d'une valve éventuellement de mélange, et qui est pourvu d'un organe de manoeuvre mis à la disposition d'un usager, lequel organe de manoeuvre autorise la connexion sélective de ladite entrée d'alimentation à l'une ou à une autre de deux ou plusieurs sorties de débit. Un combinateur diffère par rapport à un déviateur en ce qu'il doit aussi autoriser la connexion sélective de l'entrée d'alimentation simultanément à deux ou plusieurs d'une pluralité de sorties de débit.

Dans les déviateurs ou combinateurs suivant la technique connue, une chambre reçoit les connexions de l'entrée d'alimentation et des sorties de débit, et comporte un rotor pourvu d'un organe de manoeuvre; dans le rotor est réalisé au moins un passage qui est connecté de façon étanche à l'entrée d'alimentation et qui, moyennant son déplacement, peut être connecté de façon étanche aux sorties de débit que l'usager veut connecter à l'entrée d'alimentation.

Par conséquence, le rotor doit être pourvu d'une ou plusieurs garnitures d'étanchéité mobiles, destinées à coopérer avec l'entrée d'alimentation et avec au moins une des sorties de débit, et ces garnitures d'étanchéité doivent être assujetties à une pression mécanique suffisante pour établir l'étanchéité même en présence de la plus haute pression hydraulique qu'on peut prévoir qui s'avérera en des occasions particulières, tandis que dans le fonctionnement normal du dispositif la pression hydraulique est bien plus réduite. De ce fait les garnitures d'étanchéité sont soumises d'une façon inutile à une usure importante, et de plus la résistance de friction qu'elles opposent à la manoeuvre du rotor est inutilement élevée. Les conséquences en sont une réduction de la durée utile du dispositif et une augmentation de la force que l'usager doit appliquer pour la manoeuvre. D'autre part, le passage réalisé dans le rotor ne peut pas présenter une grande section, et il doit avoir une conformation relativement complexe, de sorte que ce passage oppose une considérable résistance au flux, et le débit maximum admis par le dispositif est relativement réduit par rapport aux dimensions du dispositif.

Le but de la présente invention est de remédier aux inconvénients des dispositifs connus. En particulier, un but de l'invention est de permettre de proportionner en tout moment la pression mécanique appliquée aux garnitures d'étanchéité à la pression hydraulique effectivement présente. Est aussi un but de l'invention de réduire l'usure des garnitures d'étanchéité et la force requise pour la manoeuvre du dispositif. Un autre but est de réduire le nombre de garnitures d'étanchéité soumises à déplacement dont le dispositif doit être pourvu, ainsi que d'en simplifier la conformation. Un but particulier est d'autoriser un débit élevé par rapport aux dimensions du dispositif. Encore un but de l'invention est d'atteindre les buts techniques indiqués sans augmenter, ou même aussi en réduisant, le prix de revient du dispositif.

Le dispositif suivant l'invention est du type qui comporte un corps, dans ledit corps une chambre dans laquelle ouvre une entrée d'alimentation, ladite chambre comportant une surface plane dans laquelle sont formées des ouvertures connectées à des sorties de débit, et ladite chambre comportant un rotor dont l'axe de rotation est perpendiculaire à ladite surface plane de la chambre, ce rotor étant pourvu d'un organe de manoeuvre, et ce dispositif est caractérisé en ce que ladite entrée d'alimentation ouvre librement dans ladite chambre, et que ledit rotor comporte un ou plusieurs organes tubulaires d'obturation, chacun desquels comporte une garniture d'étanchéité sous forme de piston appliquée contre ladite surface plane de la chambre et coopérant avec lesdites ouvertures des sorties de débit pour les fermer, la cavité dudit organe d'obturation tubulaire étant en communication avec ladite chambre.

Eventuellement, un organe élastique de pré-charge peut être disposé dans chaque organe d'obturation tubulaire pour appliquer à la garniture à piston correspondante une pression mécanique auxiliaire dirigée vers ladite surface plane de la chambre.

Du fait de ces caractéristiques, quand un organe d'obturation tubulaire est porté avec sa garniture d'étanchéité en correspondance avec une ouverture communiquant avec une sortie de débit, cette sortie est fermée et elle n'est pas en communication avec l'entrée d'alimentation, tandis que toutes les ouvertures communiquant avec des sorties de débit qui ne sont pas fermées de cette façon sont en communication libre avec l'entrée d'alimentation. En choisissant d'une façon convenable les positions des ouvertures communiquant avec les sorties de débit ainsi que le nombre et les positions des organes d'obturation tubulaires, le dispositif peut être configuré comme un déviateur ayant deux ou plusieurs sorties de débit, ou bien comme un combinateur capable de réaliser toute combinaison voulue de connexions des sorties de débit avec l'entrée d'alimentation.

Les avantages qui en résultent sont plusieurs. En premier lieu, chaque garniture à piston d'un organe d'obturation tubulaire est poussée, contre la surface dans laquelle sont formées les ouvertures connectées aux sorties de débit, par la pression hydraulique présente dans la chambre, laquelle communique en permanence avec l'entrée d'alimentation et avec laquelle communiquent les organes d'obturation tubulaires. Par conséquent, la pression mécanique appliquée à ces garnitures est toujours proportionnée à la pression hydraulique à laquelle la fermeture étanche doit résister. Lorsqu'un organe élastique de pré-charge est prévu, celui-ci a seulement la fonction auxiliaire d'assurer la fermeture étanche même en présence d'une pression hydraulique très réduite, et la force qu'il exerce peut être très faible. En résultent, avec une grande sécurité de fonctionnement, une réduction de l'usure des garnitures ainsi que de la force exigée pour la manoeuvre du dispositif.

Un autre avantage de la disposition suivant l'invention est la réduction du nombre de garnitures soumises à déplacement. En effet, seulement des garnitures mobiles destinées à coopérer avec les ouvertures de sortie sont exigées, tandis que l'entrée d'alimentation à la chambre est libre. De plus, cette entrée, qui n'est pas destinée à coopérer avec le rotor, peut être disposée par rapport à la chambre dans toute position estimée favorable.

Encore, le prix de revient des garnitures peut être réduit du fait que ces garnitures travaillent seulement comme bouchons et ne sont pas traversées par le flux d'eau, de sorte que leur forme est plus simple. Ces garnitures ainsi que leurs sièges dans les organes d'obturation peuvent être conformées de sorte que l'élasticité même de chaque garniture constitue un moyen élastique ayant la fonction d'un organe de pré-charge.

Enfin, la résistance opposée au flux par le dispositif est extrêmement réduite du fait que soit l'entrée d'alimentation, soit les sorties de débit qui ne sont pas fermées par les organes tubulaires d'obturation, ouvrent directement et librement dans la chambre, laquelle forme un communication directe de l'entrée à la sortie, sans que le flux doit parcourir un passage relativement rétréci.

Ces caractéristiques et d'autres, des buts et des avantages de l'objet de la présente invention, vont ressortir plus clairement de la suivante description de certains modes de réalisation, constituant des exemples non limitatifs, faisant référence aux dessins annexés, dans lesquels:
La figure 1 montre en section un dispositif ayant le caractère d'un déviateur avec deux sorties, représenté dans la position dans laquelle il établit la communication de l'entrée d'alimentation avec une première sortie.
La figure 2 montre en section le dispositif suivant la figure 1, représenté dans la position dans laquelle il établit la communication de l'entrée d'alimentation avec sa deuxième sortie.
La figure 3 montre une section transversale faite suivant la ligne III-III de la figure 1.
La figure 4 montre une section transversale faite suivant la ligne IV-IV de la figure 2.
La figure 5 représente une section similaire de celle de la figure 3, et elle montre comme l'entrée d'alimentation peut être déplacée à volonté par rapport à sa position centrale suivant la figure 3.
La figure 6 représente un déviateur ayant trois sorties, en une section diamétrale similaire de celle de la figure 1.
La figure 7 montre une section transversale faite suivant la ligne VII-VII de la figure 6.
Les figures 8 et 9 représentent le déviateur suivant la figure 7 en deux différentes positions de fonctionnement.
La figure 10 est une section similaire de celle de la figure 7, et elle montre comme le dispositif suivant la figure 6 peut être transformé en un combinateur ayant trois sorties.
Les figures 11 et 12 représentent le combinateur suivant la figure 10 en deux différentes positions de fonctionnement.
La figure 13 est une section transversale similaire de celle de la figure 7, et elle montre une variante de réalisation.

Faisant référence aux figures de 1 à 4, le numéro 1 désigne le corps du dispositif, lequel dans ces exemples est configuré comme une cartouche, mais bien entendu peut être configuré d'une façon quelconque. Dans ce corps 1 est formée une chambre 2, laquelle est limitée en bas (suivant les dessins) par un fond 3 qui présente une ouverture d'entrée d'alimentation 4 et deux ouvertures de sortie de débit 5 et 6, toutes ouvrant sur la surface supérieure plane 3' du fond 3, laquelle constitue une surface plane de la chambre 2. Le fond 3 peut constituer un élément séparé appliqué au corps 1, comme représenté, ou bien il peut être réalisé en une seule pièce avec le corps 1. Dans la chambre 2 est inséré tournant un rotor 7 qui est joint en rotation à un moyen de commande, comme une tige 8 destinée à recevoir une poignée (non représentée) ou un autre moyen de manoeuvre mis à la disposition d'un usager. Le rotor 7 peut tourner autour d'un axe de rotation 0 perpendiculaire de la surface plane 3' du fond 3, sur laquelle ouvrent les ouvertures 4, 5 et 6.

Le rotor 7 comporte un organe d'obturation tubulaire 9 dont la cavité 10 communique par des ouvertures 11 avec la chambre 2. Dans la cavité 10 de l'organe d'obturation tubulaire 9 est insérée une garniture d'étanchéité 12 ayant la forme d'un piston, dont la surface de travail est en appui contre la surface plane 3' du fond 3. Un organe élastique, tel qu'un ressort 13, peut être disposé de sorte à pousser la garniture 12 contre le fond 3. Toutefois, cette fonction peut être accomplie aussi par l'élasticité propre de la garniture 12 ou/et par des conformations adéquates de la garniture et du siège formé pour la garniture dans la cavité 10 de l'organe d'obturation tubulaire 9.

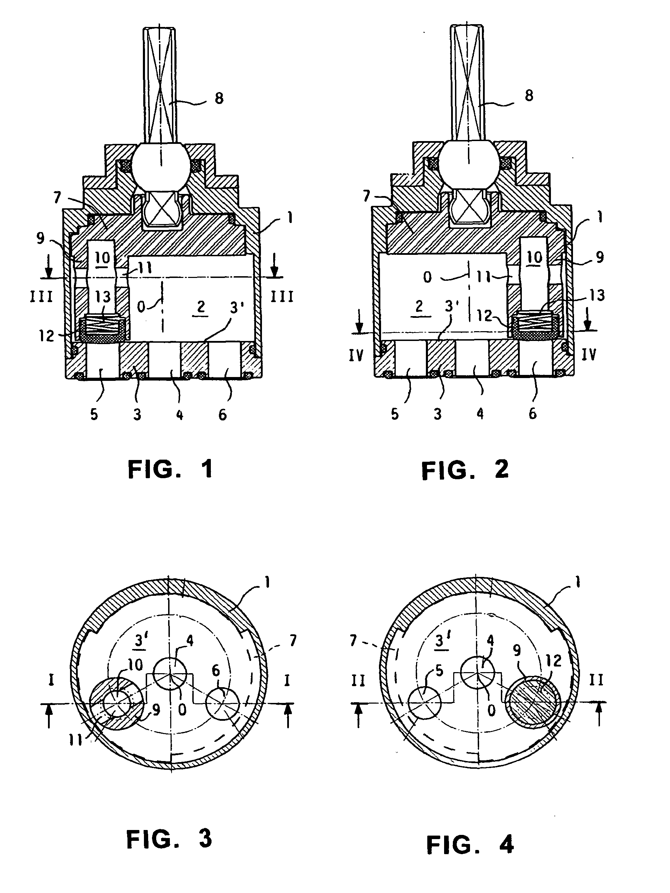

Le fonctionnement du dispositif est le suivant. Lorsque, en tournant l'organe de commande 8, le rotor 7 est porté dans une position comme celle suivant les figures 1 et 3, dans laquelle l'organe d'obturation tubulaire 9 est disposé avec sa garniture d'étanchéité 12 en correspondance de l'ouverture de sortie 5, cette ouverture de sortie 5 est fermée et elle ne peut pas être alimentée. Au contraire, l'ouverture de sortie 6 est en communication libre avec l'ouverture d'entrée 4 au travers de la chambre 2, et quand de l'eau est alimentée par l'ouverture d'entrée 4, elle s'écoule à travers la chambre 2 et l'ouverture de sortie 6 sans rencontrer aucune résistance appréciable. Le dispositif peut donc autoriser un grand débit, même s'il peut présenter des dimensions réduites.

Par contre lorsque, en tournant l'organe de commande 8, le rotor 7 est porté dans une position comme celle suivant les figures 2 et 4, dans laquelle l'organe d'obturation tubulaire 9 est disposé avec sa garniture d'étanchéité 12 en correspondance de l'ouverture de sortie 6, cette ouverture de sortie 6 est fermée et elle ne peut pas être alimentée. Au contraire, l'ouverture de sortie 5 est en communication libre avec l'ouverture d'entrée 4 au travers de la chambre 2, et quand de l'eau est alimentée par l'ouverture d'entrée 4, elle s'écoule à travers la chambre 2 et l'ouverture de sortie 5 sans rencontrer aucune résistance appréciable.

Le dispositif se comporte donc comme un déviateur entre les deux ouvertures de sortie 5 et 6. Des conformations convenables du rotor 7 et du corps 1 peuvent délimiter de manière connue la rotation permise au rotor 7, de sorte à faciliter la manoeuvre de l'usager, en déterminant de façon précise les deux positions de travail du déviateur. Il faut noter que ce déviateur exige une seule garniture soumise à déplacement, et que cette garniture est de construction particulièrement économique en vue de sa forme.

Pendant le fonctionnement la chambre 2, qui communique librement avec l'ouverture d'entrée 4, est soumise à la pression hydraulique de travail, laquelle au travers des ouvertures 11 est transmise à la cavité 10 de l'organe d'obturation tubulaire 9, et donc s'applique à la garniture à piston 12 en la poussant contre la surface plane du fond 3. Par conséquent, la pression mécanique exercée sur la garniture d'étanchéité 12 est toujours proportionnée à la pression hydraulique contre laquelle doit être obtenue l'étanchéité. De cette façon on assure toujours une étanchéité efficace, en même temps évitant toute usure inutile de la garniture ainsi que l'augmentation inutile de la friction et donc de la force requise pour la manoeuvre du déviateur.

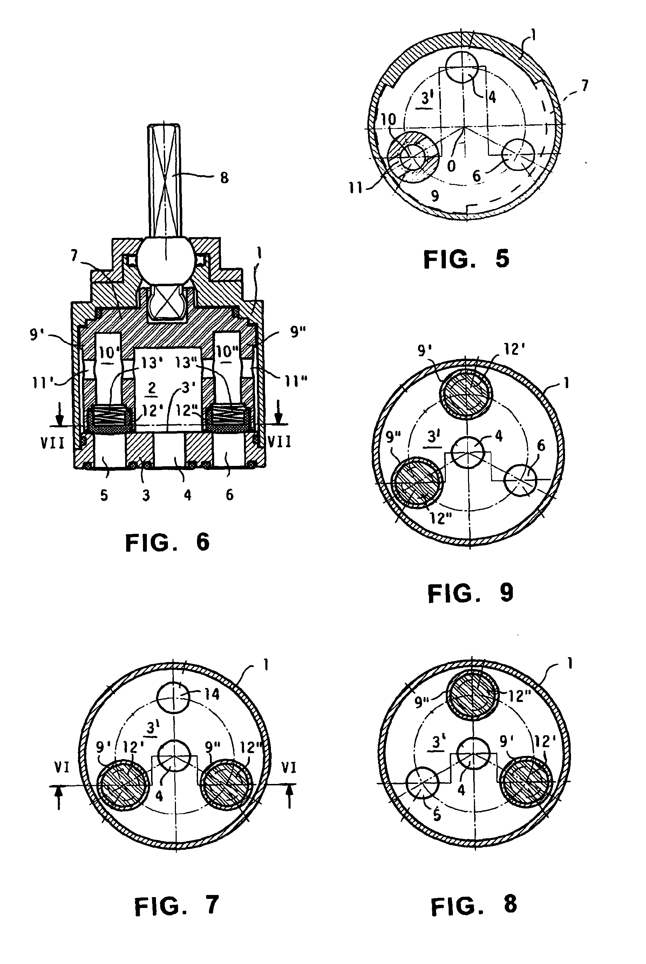

La position par rapport à la chambre 2 dans laquelle l'ouverture d'alimentation 4 est pratiquée dans le fond 3 n'est pas critique. Cette ouverture peut être disposée dans la position estimée plus convenable pour des raisons de construction ou/et d'installation. Par exemple, cette ouverture peut être centrale comme suivant les figures 3 et 4, ou bien elle peut être périphérique comme montré par la figure 5. En d'autres cas, cette ouverture pourrait être pratiquée dans le corps 1 au lieu que dans le fond 3.

Faisant référence aux figures 6 à 9, y est représenté un dispositif constituant un déviateur avec trois sorties. Les parties qui correspondent aux parties décrites par rapport aux figures qui précèdent sont désignées par les mêmes chiffres de référence.

Contrairement au cas précédent, les ouvertures de sortie pratiquées dans le fond 3 sont en nombre de trois: 5, 6 et 14, et le rotor 9, au lieu de présenter seulement un organe d'obturation tubulaire 9 avec sa cavité 10, les ouvertures 11, la garniture 12 et éventuellement le ressort 13 de pré-charge, est pourvu de deux organes d'obturation tubulaires 9' et 9" avec leurs cavités 10' et 10", les ouvertures 11' et 11", les garnitures 12' et 12" et éventuellement les ressorts 13' et 13" de pré-charge. Les deux organes d'obturation tubulaires 9' et 9" sont disposés en des positions convenables par rapport aux ouvertures de sortie 5, 6 et 14.

De cette façon, quand le déviateur est disposé dans la position représentée dans la figure 7, les garnitures 12' et 12" ferment les deux ouvertures de sortie 5 et 6 et laissent libre seulement l'ouverture de sortie 14, laquelle donc communique avec l'ouverture d'entrée d'alimentation 4. Quand, en manoeuvrant la rotation du rotor 7, le déviateur est porté dans la position représentée dans la figure 8, les garnitures 12' et 12" ferment les deux ouvertures de sortie 6 et 14 et laissent libre seulement l'ouverture de sortie 5, laquelle donc communique avec l'ouverture d'entrée d'alimentation 4. Quand enfin, en manoeuvrant encore la rotation du rotor 7, le déviateur est porté dans la position représentée dans la figure 9, les garnitures 12' et 12" ferment les deux ouvertures de sortie 5 et 14 et laissent libre seulement l'ouverture de sortie 6, laquelle donc communique avec l'ouverture d'entrée d'alimentation 4.

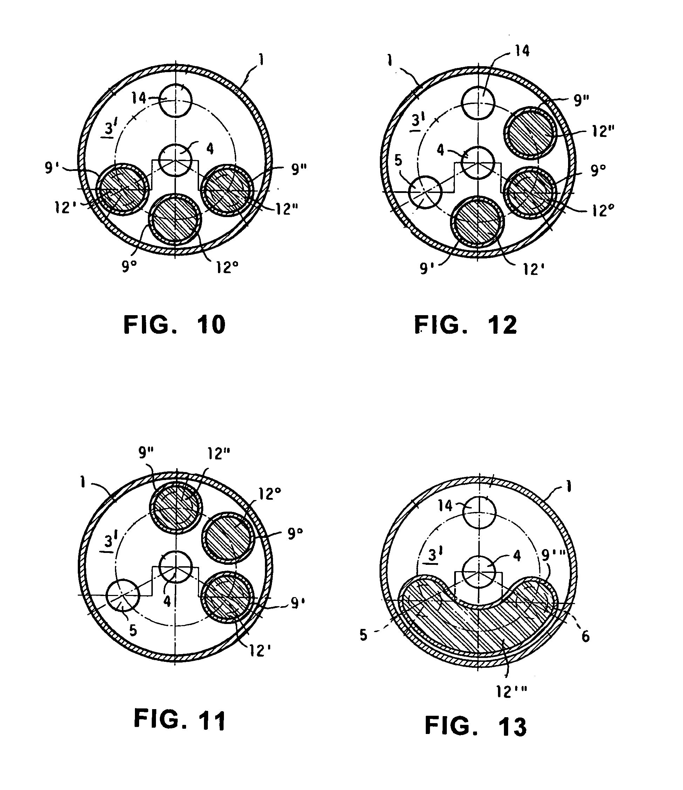

Les figures 10 à 12 montrent comme le dispositif suivant l'invention peut être réalisé sous la forme d'un combinateur. Dans cet exemple, les ouvertures de sortie pratiquées dans le fond 3 sont les mêmes 5, 6 et 14 qui sont représentées dans les figures 7 à 9, mais dans ce cas le dispositif est pourvu de trois organes d'obturation tubulaires 9°, 9' et 9" avec leurs cavités, les ouvertures de communication avec la chambre du dispositif, les garnitures 12°, 12' et 12" et éventuellement des ressorts de pré-charge. Quand le dispositif est disposé dans la position représentée dans la figure 10, les garnitures 12' et 12" ferment deux ouvertures de sortie et laissent libre seulement l'ouverture de sortie 14 laquelle, donc, communique avec l'ouverture d'entrée d'alimentation 4; la garniture 12° demeure inactive. Quand, en manoeuvrant la rotation du rotor 7, le dispositif est porté dans la position représentée dans la figure 11, les garnitures 12' et 12" ferment deux ouvertures de sortie et laissent libre seulement l'ouverture de sortie 5 laquelle, donc, communique avec l'ouverture d'entrée d'alimentation 4; la garniture 12° demeure encore inactive. Par contre, quand, en manoeuvrant la rotation du rotor 7, le dispositif est porté dans la position représentée dans la figure 12, la garniture 12° ferme une ouverture de sortie et laisse libres les deux ouvertures de sortie 5 et 14 lesquelles, donc, communiquent avec l'ouverture d'entrée d'alimentation 4; dans ce cas, les deux garnitures 12' et 12" demeurent inactives. On comprendra que des autres positions du dispositif, non représentées, autorisent toutes les autres combinaisons possibles d'alimentation d'une seule ou de deux ouvertures de sortie 5, 6 et 14.

On voit donc que dans ce cas le dispositif constitue un combinateur qui autorise l'alimentation sélective d'une seulement de ses trois ouvertures de sortie, ou bien de toute combinaison de deux ouvertures de sortie. On comprendra facilement que, en choisissant convenablement le nombre et la disposition des ouvertures de sortie et le nombre et la disposition des organes d'obturation tubulaires, on peut réaliser pour un combinateur nombre de conditions de fonctionnement réputées utiles.

On peut toutefois remarquer qu'aussi les réalisations suivant les figures 1 à 4 et 6 à 9 peuvent fonctionner comme combinateurs, même si avec des caractéristiques limitées, si l'on prévoit des positions de travail intermédiaires entre les positions représentées.

Dans les exemples qui précèdent, on a supposé que les organes d'obturation tubulaires soient cylindriques de section circulaire et que leurs garnitures sous la forme de pistons aient des sections circulaires. Toutefois ces formes ne sont pas limitatives. La figure 13 montre comme, en donnant à une garniture 12'" une forme en arc, cette garniture peut accomplir les fonctions de deux garnitures comme celles 12' et 12" suivant la figure 7, ou bien de trois garnitures comme celles 12°, 12' et 12" suivant la figure 10. Une telle garniture en arc peut être supportée par un seul organe d'obturation tubulaire ayant lui aussi une section en arc correspondante, ou bien par deux ou plusieurs organes d'obturation tubulaires de section circulaire (par exemple ceux suivant la figure 6) supportant des points différents de la garniture en arc 12"'.

On comprend donc que l'application de l'invention peut présenter une grande flexibilité dans la réalisation de formes constructives très différentes.

On doit comprendre que l'invention n'est pas limitée aux réalisations décrites et représentées comme exemples. Maintes modifications possibles ont été indiquées dans le cours de la description, et d'autres sont à la portée de l'homme de métier.

## Revendications

1. Dispositif déviateur ou combinateur pour des installations hydrauliques, comportant un corps (1), dans ledit corps une chambre (2) dans laquelle ouvre une entrée d'alimentation (4), ladite chambre (2) comportant une surface plane (3') dans laquelle sont formées des ouvertures (5,6,14) connectées à des sorties de débit, et ladite chambre (2) comportant un rotor (7) dont l'axe de rotation (0) est perpendiculaire à ladite surface plane (3') de la chambre (2), ce rotor (7) étant pourvu d'un organe de manoeuvre (8); dispositif **caractérisé en ce que** ladite entrée d'alimentation (4) ouvre librement dans ladite chambre (2), et que ledit rotor (7) comporte un ou plusieurs organes tubulaires d'obturation (9,9°,9',9",9"'), chacun desquels comporte dans une cavité (10) une garniture d'étanchéité (12,12°,12',12'',12''') sous forme de piston appliquée contre ladite surface plane (3') de la chambre (2) et coopérant avec lesdites ouvertures (5,6,14) des sorties de débit pour les fermer, la cavité (10) dudit organe d'obturation tubulaire (9,9°,9',9",9"') étant en communication avec ladite chambre (2).

2. Dispositif pour des installations hydrauliques, suivant la revendication 1, **caractérisé en ce qu'**un organe élastique de pré-charge (13) est disposé dans la cavité (10) de chaque organe d'obturation tubulaire (9,9°,9',9",9"') pour appliquer à la garniture à piston correspondante (12,12°,12',12'',12''') une pression mécanique dirigée vers ladite surface plane (3') de la chambre (2).

3. Dispositif pour des installations hydrauliques, suivant la revendication 1, **caractérisé en ce qu'**il comprend deux ouvertures de sortie (5,6) et un organe d'obturation tubulaire (9) seulement, pour constituer un déviateur ou combinateur ayant deux sorties.

4. Dispositif pour des installations hydrauliques, suivant la revendication 1, **caractérisé en ce qu'**il comprend trois ouvertures de sortie (5,6,14) et deux organes d'obturation tubulaires (9',9"), pour constituer un déviateur ou combinateur ayant trois sorties.

5. Dispositif pour des installations hydrauliques, suivant la revendication 1, **caractérisé en ce qu'**il comprend au moins trois ouvertures de sortie (5, 6,14) et au moins trois organes d'obturation tubulaires (9°,9',9"), pour constituer un déviateur ou combinateur ayant plusieurs sorties.

6. Dispositif pour des installations hydrauliques, suivant la revendication 1, **caractérisé en ce qu'**au moins lesdites ouvertures de sortie (5,6,14) sont pratiquées dans un fond (3) qui limite la chambre du dispositif en constituant sa surface plane (3').

7. Dispositif pour des installations hydrauliques, suivant la revendication 6, **caractérisé en ce qu'**aussi l'ouverture d'entrée d'alimentation (4) est pratiquée dans ledit fond (3).

8. Dispositif pour des installations hydrauliques, suivant la revendication 6, **caractérisé en ce que** ledit fond (3) est réalisé en une seule pièce avec le corps (1) du dispositif, ou bien est constitué par une pièce séparée (3) appliquée audit corps (1).

9. Dispositif pour des installations hydrauliques, suivant la revendication 1, **caractérisé en ce que** lesdits organes d'obturation tubulaires (9,9°,9',9'') ont la forme de cylindres circulaires.

10. Dispositif pour des installations hydrauliques, suivant la revendication 1, **caractérisé en ce que** les dites garnitures (12,12°,12',12'') en forme di pistons ont un contour circulaire.

11. Dispositif pour des installations hydrauliques, suivant la revendication 1, **caractérisé en ce qu'**au moins une (12"') desdites garnitures d'étanchéité en forme de pistons a un contour en arc.
